(19)

**Europäisches Patentamt**
**European Patent Office**
**Office européen des brevets**

(11) **EP 4 583 188 A2**

(12) **EUROPEAN PATENT APPLICATION**

(43) Date of publication:
**09.07.2025 Bulletin 2025/28**

(21) Application number: **24223810.3**

(22) Date of filing: **31.12.2024**

(51) International Patent Classification (IPC):
*H01M 4/131* $^{(2010.01)}$    *H01M 4/136* $^{(2010.01)}$
*H01M 4/36* $^{(2006.01)}$    *H01M 4/525* $^{(2010.01)}$
*H01M 4/58* $^{(2010.01)}$    *H01M 4/62* $^{(2006.01)}$
*H01M 10/052* $^{(2010.01)}$

(52) Cooperative Patent Classification (CPC):
**H01M 4/366; H01M 4/131; H01M 4/136;**
**H01M 4/525; H01M 4/5825; H01M 4/624;**
**H01M 4/625; H01M 10/052**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **04.01.2024 KR 20240001593**

(71) Applicant: **SK On Co., Ltd.**
**Seoul 03161 (KR)**

(72) Inventors:
• **CHOI, Young Ju**
  **34124 Daejeon (KR)**
• **KIM, Sung Do**
  **34124 Daejeon (KR)**

• **KIM, Jeong A**
  **34124 Daejeon (KR)**
• **KIM, Ho Seong**
  **34124 Daejeon (KR)**
• **PARK, Sun Min**
  **34124 Daejeon (KR)**
• **LEE, Sang Han**
  **34124 Daejeon (KR)**
• **LEE, Yong Seok**
  **34124 Daejeon (KR)**

(74) Representative: **Stolmár & Partner**
**Patentanwälte PartG mbB**
**Blumenstraße 17**
**80331 München (DE)**

(54) **CATHODE FOR LITHIUM SECONDARY BATTERY AND LITHIUM SECONDARY BATTERY INCLUDING THE SAME**

(57)    Cathodes and secondary batteries including the cathodes are disclosed. In an embodiment, a cathode includes: a cathode current collector; a first cathode active material disposed on at least one surface of the cathode current collector, and including a first cathode active material; and a second cathode active material layer disposed on the first cathode active material layer, and including a second cathode active material different from the first cathode active material, wherein a Raman peak intensity ratio of the first cathode active material layer is smaller than a Raman peak intensity ratio of the second cathode active material layer.

[FIG. 1]

**Description**

CROSS-REFERENCE TO RELATED APPLICATION

This patent document claims the priority and benefits of Korean Patent Application No. 10-2024-0001593 filed on January 04, 2024, the entire disclosure of which is incorporated herein by reference.

TECHNICAL FIELD

The disclosed technology relates to a cathode for a lithium secondary battery and a lithium secondary battery including the same.

BACKGROUND

Secondary batteries can be repeatedly charged and discharged. With the developments of the information and communication industries, secondary batteries are widely used as a power source of various portable electronic devices such as camcorders, mobile phones, laptop computers. Recently, battery packs including the secondary batteries are being developed and applied as a power source of eco-friendly automobiles such as electric vehicles and hybrid vehicles

Examples of secondary batteries may include lithium secondary batteries, nickel-cadmium batteries, nickel-hydrogen batteries and others. Among them, lithium secondary batteries are being actively developed because they have high operating voltage and high energy density per unit weight, and are advantageous for charging speed and weight reduction.

Recently, as the application of secondary batteries such as lithium secondary batteries has expanded, the development of lithium secondary batteries with higher capacity and output is in progress.

SUMMARY

The disclosed technology can be implemented in some embodiments to provide a cathode for a lithium secondary battery having improved lifespan characteristics.

The disclosed technology can be implemented in some embodiments to provide a lithium secondary battery including the cathode having improved lifespan characteristics.

In an aspect of the disclosed technology, a cathode for a lithium secondary battery may include: a cathode current collector, a first cathode active material layer disposed on at least one surface of the cathode current collector, and including a first cathode active material; and a second cathode active material layer disposed on the first cathode active material layer, and including a second cathode active material different from the first cathode active material, wherein the first cathode active material includes boron, and a first Raman peak intensity ratio defined by Equation 1 below is smaller than a second Raman peak intensity ratio defined by Equation 2 below.

[Equation 1]

$$\text{First Raman peak intensity ratio} = ID1/IG1$$

[Equation 2]

$$\text{Second Raman peak intensity ratio} = ID2/IG2.$$

In Equations 1 and 2, ID1 is a maximum peak intensity in a wavenumber range of 1300 $cm^{-1}$ to 1400 $cm^{-1}$ in a Raman spectrum of the first cathode active material layer, IG1 is a maximum peak intensity in a wavenumber range of 1550 $cm^{-1}$ to 1650 $cm^{-1}$ in a Raman spectrum of the first cathode active material layer, ID2 is a maximum peak intensity in a wavenumber range of 1300 $cm^{-1}$ to 1400 $cm^{-1}$ in a Raman spectrum of the second cathode active material layer, and IG2 is a maximum peak intensity in a wavenumber range of 1550 $cm^{-1}$ to 1650 $cm^{-1}$ in a Raman spectrum of the second cathode active material layer.

In some embodiments, the first cathode active material may further include at least one of titanium, aluminum, barium, cobalt, or zirconium.

In some embodiments, the second cathode active material may do not include boron.

In some embodiments, the first Raman peak intensity ratio may be 0.5 to 1.1.

In some embodiments, the second Raman peak intensity ratio may be 1.0 to 1.2.

In some embodiments, each of the first cathode active material layer and the second cathode active material layer may further include at least one of a point-type conductive material or a linear conductive material.

In some embodiments, the first cathode active material layer may include the point-type conductive material, and the second cathode active material layer may include the linear conductive material.

In some embodiments, the point-type conductive material may include at least one selected from the group consisting of graphite, carbon black, graphene, tin, tin oxide, titanium oxide, LaSrCoO3 and LaSrMnO3.

In some embodiments, the linear conductive material may include carbon nanotubes.

In some embodiments, a content of the boron may be 0.5 % by weight to 3 % by weight based on a weight of the first cathode active material.

In another aspect of the disclosed technology, a lithium secondary battery may include: the cathode for a lithium secondary battery discussed above based on some embodiments; and an anode disposed to face the cathode.

In an embodiment of the disclosed technology, a side reaction between the cathode active material and the electrolyte may be reduced and an electrical conductivity of the cathode may be improved. Accordingly, the lifespan characteristics at a high temperature may be enhanced.

In an embodiment of the disclosed technology, the strength and stability of the cathode may be improved by a high amorphousness of the second cathode active material layer, and a resistance at a high temperature may be reduced through a crystallinity of the first cathode active material layer.

The cathode and the lithium secondary battery based on some embodiment of the disclosed technology may be widely applied to green technology fields such as an electric vehicle, and a battery charging station, as well as other solar power generation and wind power generation using the batteries. The cathode for a lithium secondary battery and the lithium secondary battery based on some embodiment of the disclosed technology may be used in an eco-friendly electric vehicle and a hybrid vehicle that can prevent climate change by suppressing air pollution and greenhouse gas emissions.

BRIEF DESCRIPTION OF THE DRAWINGS

The above and other objects, features and other advantages of the disclosed technology will be more clearly understood from the following detailed description taken in conjunction with the accompanying drawings, in which:

FIG. 1 is a schematic cross-sectional view illustrating a cathode for a lithium secondary battery based on some embodiments; and
FIGS. 2 and 3 are a schematic plan view and a cross-sectional view illustrating a lithium secondary battery based on some embodiments, respectively.

DETAILED DESCRIPTION

Section headings are used in the present document only for ease of understanding and do not limit scope of the embodiments to the section in which they are described.

Capacity characteristics and lifespan characteristics of secondary batteries such as lithium secondary batteries may be decreased depending on a cathode structure of the lithium secondary battery and a cathode active material and a conductive material included in the cathode. The disclosed technology can be implemented in some embodiments to provide a cathode for a secondary battery such as a lithium secondary battery. In addition, the disclosed technology can be implemented in some embodiments to provide a secondary battery such as a lithium secondary battery including the cathode is provided. In some embodiments, the term "lithium secondary battery" can be used to indicate any type of secondary battery.

The following description is merely an example and does not intended to limit the disclosed technology to a specific implementation.

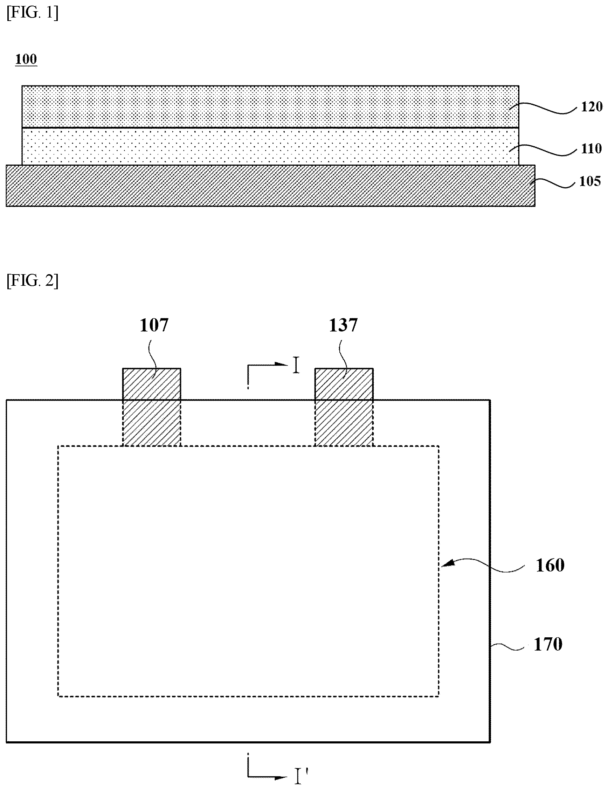

FIG. 1 is a schematic cross-sectional view illustrating a cathode for a lithium secondary battery based on some embodiments.

Referring to FIG. 1, a cathode 100 may include a cathode current collector 105, a first cathode active material layer 110 and a second cathode active material layer 120.

The cathode current collector 105 may include stainless steel, nickel, aluminum, titanium or an alloy thereof. The cathode current collector 105 may also include aluminum or stainless steel subj ected to surface treatment with carbon, nickel, titanium or silver. For example, the cathode current collector 105 may have a thickness of 10 to 50 μm.

The first cathode active material layer 110 may be disposed on at least one surface of the cathode current collector 105.

The first cathode active material layer 110 may include a first cathode active material including boron (B). The boron is included in the first cathode active material relatively adjacent to the cathode current collector 105, such that a side reaction between the first cathode active material and the electrolyte may be reduced, and electrical conductivity of the cathode may be improved. Accordingly, a resistance at a high temperature may be reduced.

The boron may be applied to a surface portion of the first cathode active material or doped in the first cathode active material.

In some embodiments, the term "coating" may be used to indicate a structure of the first cathode active material that is partially doped with another material and/or a structure of the first cathode active material that includes a surface portion disposed on the first cathode active material.

In some embodiments, the first cathode active material may further include at least one of titanium (Ti), aluminum (Al), barium (Ba), cobalt (Co), or zirconium (Zr). Accordingly, the electrical conductivity may be further improved, and the side reaction may be suppressed. These elements may be applied to the surface of the first cathode active material or doped in the first cathode active material.

In some embodiments, a content of the boron may be 0.5% by weight ("wt%") to 3 wt% based on a weight of the first cathode active material. Within the above range, the lifespan characteristics of the battery may be improved while output characteristics of the first cathode active material are maintained.

In an embodiment, the first cathode active material layer 110 may be disposed to be in direct contact with the cathode current collector 105.

A content of the first cathode active material based on a total weight of the first cathode active material layer 110 may be 40 wt% or more, 50 wt% or more, 60 wt% or more, 70 wt% or more, 80 wt% or more, or 90 wt% or more.

The content of the first cathode active material based on the total weight of the first cathode active material layer 110 may be 99 wt% or less, 95 wt% or less, 90 wt% or less, or 85 wt% or less.

In one embodiment, the cathode active material included in the first cathode active material layer 110 may be substantially composed of the first cathode active material.

In some embodiments, the second cathode active material layer 120 may be disposed on the first cathode active material layer 110.

The second cathode active material layer 120 may include a second cathode active material different from the first cathode active material.

In some embodiments, the second cathode active material may not include boron. Accordingly, a capacity reduction in the second cathode active material layer 120, which is relatively spaced apart from the cathode current collector 105, may be prevented.

In one embodiment, the second cathode active material layer 120 may be disposed to be in direct contact with the first cathode active material layer 110.

A content of the second cathode active material based on a total weight of the second cathode active material layer 120 may be 40 wt% or more, 50 wt% or more, 60 wt% or more, 70 wt% or more, 80 wt% or more, or 90 wt% or more.

The content of the second cathode active material based on the total weight of the second cathode active material layer 120 may be 99 wt% or less, 95 wt% or less, 90 wt% or less, or 85 wt% or less.

In one embodiment, the cathode active material included in the second cathode active material layer 120 may be substantially composed of the second cathode active material.

In some embodiments, the first cathode active material and the second cathode active material may include a lithium-nickel metal oxide. The lithium-nickel metal oxide may further include at least one of cobalt (Co), manganese (Mn), or aluminum (Al).

In some embodiments, the first cathode active material and the second cathode active material, or the lithium-nickel metal oxide may include a layered structure or a crystal structure represented by Formula 1 below.

$$[\text{Formula 1}] \qquad Li_xNi_aM_bO_{2+z}$$

In Formula 1, x, a, b and z may be in a range $0.9 \leq x \leq 1.2$, $0.6 \leq a \leq 0.99$, $0.01 \leq b \leq 0.4$, $-0.5 \leq z \leq 0.1$, respectively. As described above, M may include Co, Mn and/or Al.

The chemical structure represented by Formula 1 indicates a bonding relationship within the layered structure or the crystal structure of the first cathode active material and the second cathode active material, and does not exclude other additional elements. For example, M includes Co and/or Mn, and Co and/or Mn may be, together with Ni, a main active element of the first cathode active material and the second cathode active material. Here, it should be understood that Formula 1 is provided to express the bonding relationship between the main active elements, and can encompass the introduction and substitution of additional elements.

In one embodiment, the cathode may further include auxiliary elements that are added to the main active elements, thereby enhancing the chemical stability of the first cathode active material and the second cathode active material, or the layered structure/crystal structure. The auxiliary element may be incorporated into the layered structure/crystal structure to form a bond, and it should be understood that this case is also included within the chemical structure represented by Formula 1.

The auxiliary element may include at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr, for example. The auxiliary element may also act as an auxiliary active element that contributes to the capacity/output activity of the first cathode active material and the second cathode active material together with Co or Mn, like Al, for example.

For example, the first cathode active material and the second cathode active material, or the lithium-nickel metal oxide may include a layered structure or a crystal structure represented by Formula 1-1 below.

[Formula 1-1]     $Li_xNi_aM1_{b1}M2_{b2}O_{2+z}$

In Formula 1-1, M1 may include Co, Mn and/or Al. M2 may include the above-described auxiliary elements. In Formula 1-1, x, a, b1, b2 and z may be in a range of $0.9 \leq x \leq 1.2$, $0.6 \leq a \leq 0.99$, $0.01 \leq b1+b2 \leq 0.4$, $-0.5 \leq z \leq 0.1$, respectively.

The first cathode active material and the second cathode active material may further include a coating element or a doping element in addition to the above-described boron. For example, elements that are substantially the same as or similar to the above-described auxiliary elements may be used as the coating element or the doping element. For example, the above-described elements may be used alone or a combination of two or more of the above-described elements may be used as the coating element or the doping element.

The coating element or the doping element may be disposed on the surface of the lithium-nickel metal oxide particles, or may penetrate through the surface of the lithium-nickel metal oxide particles to be included in the bonding structure represented by Formula 1 or Formula 1-1 above.

The first cathode active material and the second cathode active material may include a nickel-cobalt-manganese (NCM)-based lithium oxide. In this case, an NCM-based lithium oxide having an increased content of nickel may be used.

Ni may be provided as a transition metal related to the output and capacity of the lithium secondary battery. Therefore, as described above, by employing a high-content (High-Ni) composition in the first cathode active material and the second cathode active material, the capacity of the cathode and the capacity of the lithium secondary battery may be improved.

As the content of Ni is increased, long-term storage stability and lifespan stability of the cathode or the secondary battery may be relatively decreased, and a side reaction with the electrolyte may also be increased. However, the disclosed technology can be implemented in some embodiments to improve the lifespan stability and capacity retention characteristics by using Mn while maintaining electrical conductivity by including Co.

The content of Ni (e.g., a mole fraction of nickel based on the total moles of nickel, cobalt and manganese) in the NCM-based lithium oxide may be 0.5 or more, 0.6 or more, 0.7 or more, or 0.8 or more.

In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the first cathode active material and the second cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the first cathode active material and the second cathode active material may include, for example, a lithium (Li) rich layered oxide (LLO)/over lithiated oxide (OLO)-based active material, a manganese (Mn)-rich active material, or a cobalt (Co)-less active material, which have a chemical structure or a crystal structure represented by Formula 2 below. These may be used alone or in combination of two or more thereof.

[Formula 2]     $p[Li_2MnO_3]\cdot(1-p)[Li_qJO_2]$

In Formula 2, p and q are in a range of $0<p<1$, $0.9 \leq q \leq 1.2$, respectively, and J may include at least one element among Mn, Ni, Co, Fe, Cr, V, Cu, Zn, Ti, Al, Mg and B.

In some embodiments, a first Raman peak intensity ratio defined by Equation 1 below may be smaller than a second Raman peak intensity ratio defined by Equation 2 below.

[Equation 1]

First Raman peak intensity ratio $= ID1/IG1$

[Equation 2]

$$\text{Second Raman peak intensity ratio} = \text{ID2/IG2}$$

In Equation 1, ID1 is a maximum peak intensity in a wavenumber range of 1300 cm$^{-1}$ to 1400 cm-1 (e.g., D band of Raman spectrum) in a Raman spectrum of the first cathode active material layer 110. IG1 is a maximum peak intensity in a wavenumber range of 1550 cm-1 to 1650 cm$^{-1}$ (e.g., G band of Raman spectrum) in a Raman spectrum of the first cathode active material layer 110.

In Equation 2, ID2 is a maximum peak intensity in a wavenumber range of 1300 cm$^{-1}$ to 1400 cm-1 in a Raman spectrum of the second cathode active material layer 120, and IG2 is a maximum peak intensity in a wavenumber range of 1550 cm-1 to 1650 cm-1 in a Raman spectrum of the second cathode active material layer 120.

For example, the maximum peak intensity may indicate a maximum peak height in a specific wavenumber range.

For example, the first and second Raman peak intensity ratios may indicate a degree of amorphousness. For example, the higher the first and second Raman peak intensity ratios, the higher the amorphousness of the first and second cathode active material layers 110 and 120.

Since the first Raman peak intensity ratio of the first cathode active material layer 110 is smaller than the second Raman peak intensity ratio of the second cathode active material layer 120, while the strength and stability of the cathode 100 may be improved by the high amorphousness of the second cathode active material layer 120, the resistance at a high temperature may be reduced through the crystallinity of the first cathode active material layer 110.

In some embodiments, the first Raman peak intensity ratio may be 0.5 to 1.1. Within the above range, the lifespan characteristics of the battery may be further improved.

In some embodiments, the second Raman peak intensity ratio may be 1.0 to 1.2. Within the above range, the resistance at a high temperature may be further reduced.

The above-described first Raman peak intensity ratio may be changed by comprehensively controlling the type of the conductive material included in the first cathode active material layer 110, the content of the conductive material in the total weight of the first cathode active material layer 110.

The above-described second Raman peak intensity ratio may be adjusted controlling the type of the conductive material included in the second cathode active material layer 120, and/or the content of the conductive material in the total weight of the second cathode active material layer 120, and/or an average particle diameter (D50) of the second cathode active material.

In some embodiments, the first cathode active material layer 110 and the second cathode active material layer 120 may further include a point-type conductive material and/or a linear conductive material. In this way, the electrical conductivity of the cathode 100 may be further improved.

In some embodiments, the term "point-type conductive material" can be used to indicate a conductive material having an aspect ratio of 0.5 to 1.5. For example, the point-type conductive material may include a substantially spherical shape or an elliptical shape. The aspect ratio may refer to a length to a diameter of the point-type conductive material.

In some embodiments, the term "linear conductive material" can be used to indicate a conductive material having an aspect ratio of 2 to 20. The aspect ratio may refer to a length to a diameter of the linear conductive material.

In some embodiments, the point-type conductive material may include at least one selected from the group consisting of graphite, carbon black, graphene, tin, tin oxide, titanium oxide, LaSrCoO3 and LaSrMnO3.

In some embodiments, the linear conductive material may include carbon nanotubes (CNTs). Accordingly, the electrical conductivity, crystallinity and stability of the cathode 100 may be improved.

For example, the linear conductive material may include at least one selected from the group consisting of single-walled carbon nanotubes (SWCNTs), double-walled carbon nanotubes (DWCNTs), multi-walled carbon nanotubes (MWCNTs), and rope carbon nanotubes (rope CNTs).

In some embodiments, the linear conductive material may have a length of 10 $\mu$m to 55 $\mu$m. Within the above range, a gap between particles and a volume of the cathode 100 may be appropriately maintained while also improving the electron mobility of the cathode 100.

In an embodiment, the first cathode active material layer 110 may include the point-type conductive material, and the second cathode active material layer 120 may include the linear conductive material. Accordingly, the stability of the cathode may be improved while also improving the electrical conductivity.

In some embodiments, a sum of contents of the point-type conductive material and the linear conductive material included in the first cathode active material layer 110 may be 1 wt% to 5 wt% based on the total weight of the first cathode active material layer 110. Within the above range, energy density and lifespan characteristics of the cathode 100 may be improved.

In some embodiments, a sum of contents of the point-type conductive material and the linear conductive material included in the second cathode active material layer 120 may be 1 wt% to 5 wt% based on the total weight of the second cathode active material layer 120. Within the above range, the energy density and lifespan characteristics of the cathode 100 may be improved.

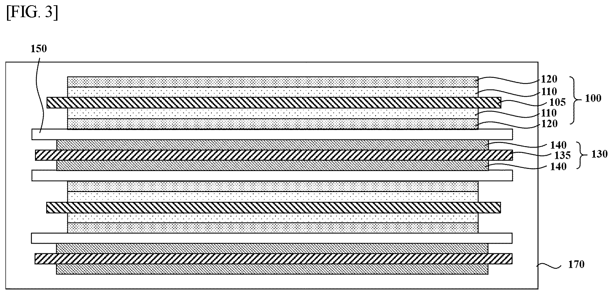

FIG. 2 is a schematic plan view and FIG. 3 is a cross-sectional view illustrating a lithium secondary battery based on some embodiments. Specifically, FIG. 3 is a cross-sectional view taken along line I-I' of FIG. 2 in a thickness direction of the lithium secondary battery.

Referring to FIGS. 2 and 3, the lithium secondary battery may include the above-described cathode 100 and an anode 130 disposed to face the cathode 100.

The first cathode active material layer 110 may be disposed on at least one surface of the cathode current collector 105, and the second cathode active material layer 120 may be disposed on the first cathode active material layer 110.

The above-described first cathode active material may be mixed in a solvent to prepare a first cathode slurry. The first cathode slurry may be coated or deposited on at least one surface of the cathode current collector 105, followed by drying and pressing the same to produce the first cathode active material layer 110. The coating may include a method such as gravure coating, slot die coating, simultaneous multilayer die coating, imprinting, doctor blade coating, dip coating, bar coating or casting, etc.

The above-described second cathode active material may be mixed in a solvent to prepare a second cathode slurry. The second cathode slurry may be coated or deposited on the first cathode active material layer 110, followed by drying and pressing the same to produce the second cathode active material layer 120. The coating may be performed using substantially the same type of method as the above-described coating method of the first cathode active material layer 110.

The first and second cathode active material layers 110 and 120 may further include a binder, and optionally further include a thickener.

As the solvent, N-methyl-2-pyrrolidone (NMP), dimethylformamide, dimethylacetamide, N,N-dimethylaminopropylamine, ethylene oxide, and/or tetrahydrofuran may be used.

The binder may include polyvinylidene fluoride (PVDF), polyvinylidene fluoride-co-hexafluoropropylene, polyacrylonitrile, polymethylmethacrylate, acrylonitrile butadiene rubber (NBR), polybutadiene rubber (BR), and/or styrene-butadiene rubber (SBR). These may be used alone or in combination of two or more thereof.

In one embodiment, a PVDF-based binder may be used as the cathode binder. In this case, the amount of binder for forming the cathode active material layers 110 and 120 may be decreased, and the amount of the cathode active material may be relatively increased. Accordingly, the output characteristics and capacity characteristics of the secondary battery may be improved.

The first and second cathode slurries may further include a thickener and/or a dispersant. In one embodiment, the first cathode slurry and/or the second cathode slurry may further include a thickener such as carboxymethyl cellulose (CMC).

The anode 130 may include an anode current collector 135, and an anode active material layer 140 formed on at least one surface of the anode current collector 135.

For example, the anode current collector 135 may include a copper foil, a nickel foil, a stainless steel foil, a titanium foil, a nickel foam, a copper foam, and/or a polymer substrate coated with conductive metal. These may be used alone or in combination of two or more thereof. For example, the anode current collector 135 may have a thickness of 10 μm to 50 μm.

The anode active material layer 140 may include an anode active material. As the anode active material, a material capable of intercalating and deintercalating lithium ions may be used. For example, as the anode active material, carbon-based materials such as crystalline carbon, amorphous carbon, a carbon composite, or carbon fibers, etc.; lithium metal; a lithium alloy; a silicon (Si)-containing material or a tin (Sn)-containing material, etc. may be used. These may be used alone or in combination of two or more thereof.

The amorphous carbon may include hard carbon, soft carbon, cokes, mesocarbon microbead (MCMB), and/or mesophase pitch-based carbon fiber (MPCF).

The crystalline carbon may include graphite-based carbon such as natural graphite, artificial graphite, graphite cokes, graphite MCMB, and/or graphite MPCF.

The lithium metal may include pure lithium metal and/or lithium metal having a protective layer formed thereon for suppressing dendrite growth. In one embodiment, a lithium metal-containing layer deposited or applied to the anode current collector 135 may be used as the anode active material layer 140. In one embodiment, a lithium thin film layer may also be used as the anode active material layer 140.

Elements contained in the lithium alloy may include aluminum, zinc, bismuth, cadmium, antimony, silicon, lead, tin, gallium, indium, etc. These may be used alone or in combination of two or more thereof.

The silicon-containing material may provide further increased capacity characteristics. The silicon-containing material may include Si, $SiOx(O<x<2)$, metal-doped $SiOx(O<x<2)$, a silicon-carbon composite, etc.

The metal may include lithium and/or magnesium, and the metal-doped $SiOx(O<x<2)$ may include a metal silicate.

The anode active material may be mixed in a solvent to prepare an anode slurry. The anode slurry may be coated or deposited on the anode current collector 135, followed by drying and pressing the same to produce the anode active material layer 140. The coating may include a method such as gravure coating, slot die coating, simultaneous multilayer die coating, imprinting, doctor blade coating, dip coating, bar coating or casting, etc. The anode active material layer 140 may further include a binder, and optionally further include a conductive material, a thickener or others.

The solvent included in the anode slurry may include water, pure water, deionized water, distilled water, ethanol, isopropanol, methanol, acetone, n-propanol, and/or t butanol. These may be used alone or in combination of two or more thereof.

The above-described materials that can be used when manufacturing the cathode 100 as the binder, conductive material and thickener may be used.

In some embodiments, a styrene-butadiene rubber (SBR)-based binder, carboxymethyl cellulose (CMC), polyacrylic acid-based binder, and/or poly(3,4-ethylenedioxythiophene, PEDOT)-based binder may be used as an anode binder. These may be used alone or in combination of two or more thereof.

In some embodiments, a separation membrane 150 may be interposed between the cathode 100 and the anode 130. The separation membrane 150 may be configured to prevent an electrical short between the cathode 100 and the anode 130, and to allow a flow of ions to occur. For example, the separation membrane may have a thickness of 10 $\mu$m to 20 $\mu$m.

For example, the separation membrane 150 may include a porous polymer film or a porous nonwoven fabric.

The porous polymer film may include a polyolefin polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers or others.

The separation membrane 150 may also include a ceramic-based material. For example, inorganic particles may be applied to the polymer film or dispersed within the polymer film to improve heat resistance.

The separation membrane 150 may have a single-layer or multi-layer structure including the above-described polymer film and/or non-woven fabric.

In some embodiments, an electrode cell is defined by the cathode 100, the anode 130, and the separation membrane 150, and a plurality of electrode cells are stacked to form, for example, a jelly roll type electrode assembly 160. For example, the electrode assembly 160 may be formed by winding, stacking z-folding, stack-folding, etc. of the separation membrane 150.

The electrode assembly 160 may be housed in a case 170 together with an electrolyte to define a lithium secondary battery. In some embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. maybe exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, dimethoxyethane, diethoxyethane, sulfolane, gamma-butyrolactone, and/or propylene sulfite may be used. These may be used alone or in combination of two or more thereof.

The non-aqueous electrolyte may further include an additive. The additive may include, for example, a cyclic carbonate compound, a fluorine-substituted cyclic carbonate compound, a sultone compound, a cyclic sulfate compound, a cyclic sulfite compound, a phosphate compound, and/or a borate compound. These may be used alone or in combination of two or more thereof.

The cyclic carbonate compound may include vinylene carbonate (VC), vinyl ethylene carbonate (VEC), etc.

The fluorine-substituted cyclic carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

In some embodiments, a solid electrolyte may be used instead of the above-described non-aqueous electrolyte. In this case, the lithium secondary battery may be manufactured in the form of an all-solid-state battery. In addition, a solid electrolyte layer may be disposed between the cathode 100 and the anode 130 instead of the above-described separation membrane 150.

The solid electrolyte may include a sulfide-based electrolyte. As a non-limiting example, the sulfide-based electrolyte may include Li2S-P2S5, Li2S-P2S5-LiCl, Li2S-P2S5-LiBr, Li2S-P2S5-LiCl-LiBr, Li2S-P2S5-Li2O, Li2S-P2S5-Li2O-LiI, Li2S-SiS2, Li2S-SiS2-LiI, Li2S-SiS2-LiBr, Li2S-SiS2-LiCl, Li2S-SiS2-B2S3 -LiI, Li2S-SiS2-P2S5-LiI, Li2S-B2S3, Li2S-P2S5-ZmSn (m and n are positive numbers, Z is Ge, Zn or Ga), Li2S-GeS2, Li2S-SiS2-Li3PO4, Li2S-SiS2-LipMOq (p and q are positive numbers, M is P, Si, Ge, B, Al, Ga or In), Li7-xPS6-xClx ($0 \leq x \leq 2$), Li7-xPS6-xBrx ($0 \leq x \leq 2$), Li7-xPS6-xIx ($0 \leq x \leq 2$), etc. These may be used alone or in combination of two or more thereof.

In one embodiment, the solid electrolyte may include an oxide-based amorphous solid electrolyte, such as, for example, Li2O-B2O3-P2O5, Li2O-SiO2, Li2O-B2O3, Li2O-B2O3-ZnO, etc.

As shown in FIGS. 2 and 3, electrode tabs (a cathode tab and an anode tab) may protrude from the cathode current collector 105 and the anode current collector 135, respectively, which belong to each electrode cell, and may extend to one side of the case 170. The electrode tabs may be fused together with the one side of the case 170 to form electrode leads (a cathode lead 107 and an anode lead 137) extending or exposed to an outside of the case 170.

The lithium secondary battery may be manufactured, for example, in a cylindrical shape using a can, a square shape, a pouch type or a coin shape.

Hereinafter, experimental examples including specific examples based on some embodiments of the disclosed technology and comparative examples are explained.

Example 1

(1) Preparation of cathode

1) Preparation of first cathode active material layer

NiSO4, CoSO4 and MnSO4 were input and mixed in a molar ratio of 0.88:0.09:0.03 in distilled water from which dissolved oxygen was removed by bubbling with N2 for 24 hours to prepare a mixture. The mixed solution was introduced into a reactor at 55 °C, and NaOH as a precipitant and NH3H2O as a chelating agent were added thereto, followed by performing co-precipitation for 36 hours to obtain Ni0.88Co0.09Mn0.03(OH)2 as a transition metal precursor. The obtained precursor was dried at 80 °C for 12 hours, and then again dried at 110 °C for 12 hours.

Lithium hydroxide and the transition metal precursor were added to a dry high-speed mixer in a ratio of 1.05:1, and uniformly mixed for 5 minutes. The mixture was put into a calcination furnace in an oxygen atmosphere, and heated to 950 °C at a heating rate of 2 °C/min, then maintained at 950 °C for 12 hours. Oxygen was continuously passed at a flow rate of 10 mL/min during the heating and calcination. After completion of the calcination, the mixture was naturally cooled to room temperature, followed by pulverization and classification to obtain a preliminary cathode active material having a composition of LiNi0.88Co0.09Mn0.03O2 (with an average particle diameter (D50) of 10 $\mu$m).

The preliminary cathode active material and a boron (B) aqueous solution as a coating/doping solution were mixed and calcined at 200 °C to prepare a first cathode active material including boron. A boron content was 1.5 wt% based on the total weight of the first cathode active material.

The first cathode active material, carbon black as a point-type conductive material, and PVDF as a binder were mixed in a mass ratio of 95:3:2 to prepare a first cathode slurry. The first cathode slurry was applied to an aluminum current collector, followed by drying and pressing the same to form a first cathode active material layer.

The carbon black had an average particle diameter (D50) of 30 nm, and a specific surface area of 254 m2/g.

2) Preparation of second cathode active material layer

The preliminary cathode active material that did not include boron was used as a second cathode active material.

The second cathode active material, carbon nanotubes (CNTs) as a linear conductive material, and PVDF as a binder were mixed in a mass ratio of95:3:2 to prepare a second cathode slurry. The second cathode slurry was applied to the first cathode active material layer, followed by drying and pressing the same to form a second cathode active material layer. A cathode including the aluminum current collector, the first cathode active material layer and the second cathode active material layer was formed.

The CNT had a length of 10 $\mu$m to 55 $\mu$m, and a specific surface area of 173 m2/g.

(2) Manufacturing of lithium secondary battery

An anode slurry, which includes 93 wt% of natural graphite as an anode active material, 5 wt% of flake type graphite (KS6) as a conductive material, 1 wt% of styrene-butadiene rubber (SBR) as a binder, and 1 wt% of carboxymethyl cellulose (CMC) as a thickener, was prepared. The anode slurry was applied to a copper substrate, followed by drying and pressing the same to prepare an anode.

Fourteen cathodes and fifteen anodes were respectively notched in a predetermined size and stacked, then an electrode cell was fabricated by interposing a separator (polyethylene, thickness 25 μm) between the cathode and anode. Thereafter, tab parts of the cathode and the anode were welded, respectively. A combination of the welded cathode/-separator/anode was put into a pouch, followed by sealing three sides of the pouch except for one side into which an electrolyte is injected ("electrolyte injection side"). At this time, a portion having the electrode tab was included in the sealing part. After injecting the electrolytic through the electrolyte injection side, the remaining electrolyte injection side was also sealed, followed by impregnation for 12 hours or more to manufacture a lithium secondary battery.

The electrolyte used herein was prepared by adding 1 wt% of vinylene carbonate (VC) and 0.5 wt% of 1,3-propene sultone (PRS) based on the total weight of the solution to 1M $LiPF_6$ solution prepared using a mixed solvent of EC/EMC (25/75; volume ratio).

Pre-charging was performed on the lithium secondary battery at a current (5 A) corresponding to 0.25C for 36 minutes. After 1 hour, degassing was performed, and aging was conducted for 24 hours or more, then formation charging/discharging was performed (charging condition: CC-CV 0.2C 4.2 V 0.05C CUT-OFF, discharging condition: CC 0.2C 2.5 V CUT-OFF).

Example 2

The preliminary cathode active material and an aqueous solution containing Ti, Zr, Ba and Co were mixed and calcined at 200 °C to prepare a second-1 cathode active material whose surface portion was coated with Ti, Zr, Ba and Co.

A cathode and a lithium secondary battery were manufactured according to the same procedures as described in Example 1, except that an aqueous solution of Ti, Al, Zr and B was used as the coating/doping solution in the step of preparing the first cathode active material, and the second-1 cathode active material was used instead of the second cathode active material in the step of preparing the second cathode active material layer.

Example 3

The preliminary cathode active material and an aqueous solution containing Al, Zr and Co were mixed and calcined at 200 °C to prepare a second-2 cathode active material.

A cathode and a lithium secondary battery were manufactured according to the same procedures as described in Example 1, except that an aqueous solution of Al, Zr and B was used as the coating/doping solution in the step of preparing the first cathode active material layer, and the first cathode active material and the second-2 cathode active material were mixed at a weight ratio of 6:4 and used instead of the second cathode active material in the step of preparing the second cathode active material layer.

Example 4

A cathode and a lithium secondary battery were manufactured according to the same procedures as described in Example 1, except that the first cathode active material, carbon black as a point-type conductive material, and PVDF as a binder were mixed in a mass ratio of 97:1:2 to prepare a first cathode slurry.

Example 5

A cathode and a lithium secondary battery were manufactured according to the same procedures as described in Example 1, except that the same amount of CNT was used instead of the carbon black.

Example 6

A cathode and a lithium secondary battery were manufactured according to the same procedures as described in Example 1, except that the same amount of carbon black was used instead of the CNT.

Example 7

A cathode and a lithium secondary battery were manufactured according to the same procedures as described in Example 1, except that the second cathode active material, carbon nanotubes (CNTs) as the linear conductive material, and PVDF as the binder were mixed in a mass ratio of 93:5:2, respectively, to prepare a second cathode slurry.

Example 8

A cathode and a lithium secondary battery were manufactured according to the same procedures as described in Example 1, except that the first cathode active material, carbon black as the point-type conductive material, and PVDF as the binder were mixed in a mass ratio of 93:5:2, respectively, to prepare a first cathode slurry.

Example 9

A cathode and a lithium secondary battery were manufactured according to the same procedures as described in Example 1, except that the second cathode active material, carbon nanotubes (CNTs) as the linear conductive material, and PVDF as the binder were mixed in a mass ratio of 97:1:2, respectively, to prepare a second cathode slurry.

Examples 10 to 13

Cathodes and lithium secondary batteries were manufactured according to the same procedures as described in Example 1, except that the boron content based on the total weight of the first cathode active material was adjusted so as to have values listed in Table 1.

Comparative Example 1

A cathode and a lithium secondary battery were manufactured according to the same procedures as described in Example 1, except that the second cathode active material layer was not formed (a cathode active material layer of a single layer structure), and the preliminary cathode active material not including boron was used as the first cathode active material.

Comparative Example 2

A cathode and a lithium secondary battery were manufactured according to the same procedures as described in Example 1, except that the second cathode active material layer was not formed (a cathode active material layer of a single layer structure).

Comparative Example 3

A cathode and a lithium secondary battery were manufactured according to the same procedures as described in Example 1, except that the preliminary cathode active material not including boron was used as the first cathode active material.

Comparative Example 4

The preliminary cathode active material and boron aqueous solution were mixed and calcined at 200 °C to prepare a second-3 cathode active material having a boron coating on the surface. The content of the coating was 1.5 wt% based on the weight of the second-3 cathode active material.
A cathode and a lithium secondary battery were prepared according to the same procedures as described in Example 1, except that the preliminary cathode active material, which is not coated with boron, was used as the first cathode active material, and the second-3 cathode active material was used as the second cathode active material.

Comparative Example 5

A cathode and a lithium secondary battery were prepared according to the same procedures as described in Example 1, except that the same amount of CNT was used instead of carbon black during the preparation of the first cathode active material layer, and the same amount of carbon black was used instead of CNT during the preparation of the second cathode active material layer.

Experimental Example

(1) Measurement of first Raman peak intensity ratio and second Raman peak intensity ratio

The cathodes manufactured according to the above-described examples and comparative examples were cut to fabricate samples.

The second Raman peak intensity ratio was measured for the second cathode active material layer, which is the outermost layer of the sample, using a 532 nm laser Raman analyzer (laser Raman spectroscopy) (Model name: Invia, Manufacturer: RENISHAW).

The specific measurement method of the Raman analyzer was as follows.

i) A power of the Raman analyzer was turned on.

ii) A spectral acquisition setup window was opened.

iii) ' Static' was selected as the Grating Scan Type, and 1000 (Raman Shift (cm-1)) was entered as the Center value.

iv) In Configuration, 532 nm Edge Emitting Laser was selected as the Laser, 1800/mm (vis) as the Grating, and Renishaw 1024 StreamLine CCD as the Detector.

v) In the Acquisition condition setting, Exposure time (s) was set to 10, Objective to 50, Accumulation to 5, Laser power (%) to 10, and Scan to 20 times.

vi) After placing the sample on a sample stage and checking a measurement site, the Raman spectrum of the sample was acquired.

In the Raman spectrum above, a peak intensity (ID2) in a band having the wavenumber of 1300 cm-1 to 1400 cm-1 (e.g., D band) and a peak intensity (IG2) in a band having the wavenumber of 1550 cm-1 to 1650 cm-1 (e.g., G band) were measured. The measured peak intensities were applied to Equation 2 to calculate the second Raman peak intensity ratio.

The second cathode active material layer was partially removed by repeatedly attaching and detaching the 3M tape to an upper surface of the sample, and the Raman spectrum was obtained using the same equipment and method as the measurement of the second Raman peak intensity ratio for the first cathode active material layer.

In the Raman spectrum above, a peak intensity (ID1) in a band having the wavenumber of 1300 cm-1 to 1400 cm-1 (e.g., D band) and a peak intensity (IG1) in a band having the wavenumber of 1550 cm-1 to 1650 cm-1 (e.g., G band) were measured. The measured peak intensities were applied to Equation 1 to calculate the first Raman peak intensity ratio.

(2) Evaluation of capacity retention rate

Charging (CC-CV 0.5C 4.3 V 0.05C CUT-OFF) and discharging (CC 1.0C 2.5 V CUT-OFF) were repeated on the above-described lithium secondary batteries of the examples and comparative examples 200 times in a chamber at 25 °C. Then, the capacity retention rates were evaluated by dividing the discharge capacity at 200 times by the discharge capacity at one time, and multiplying by 100.

(3) Evaluation of high-temperature resistance increase rate

Charging and discharging were repeated on the above-described lithium secondary batteries of the examples and comparative examples 200 times in a chamber at 45 °C according to the same procedures as described in Experimental Example (2).

DCIR was measured on the lithium secondary batteries after discharging once for 10 seconds at an SOC 50% state, and DCIR was measured on the lithium secondary batteries after discharging 200 times for 10 seconds at an SOC 50% state. Then, the high-temperature resistance increase rates were evaluated by dividing the DCIR after discharging 200 times by the DCIR after discharging once, and multiplying by 100.

Measurement and evaluation results are shown in Tables 1 and 2 below.

The coating content based on the weight of the first cathode active material and the type of conductive material of each layer are shown in Table 1 below.

In Table 1, the "Point-type" indicates a point-type conductive material (carbon black), and the "Linear" indicates a linear conductive material (CNT).

TABLE 1

| | Boron content (wt%) | First Raman peak intensity ratio | Second Raman peak intensity ratio | Type of conductive material | |
|---|---|---|---|---|---|
| | | | | First cathode active material layer | Second cathode active material layer |
| Example 1 | 1.5 | 0.96 | 1.11 | Point-type | Linear |
| Example 2 | 1.5 | 1.10 | 1.17 | Point-type | Linear |
| Example 3 | 1.5 | 1.08 | 1.20 | Point-type | Linear |
| Example 4 | 1.5 | 0.48 | 1.10 | Point-type | Linear |
| Example 5 | 1.5 | 1.11 | 1.17 | Linear | Linear |
| Example 6 | 1.5 | 0.87 | 0.98 | Point-type | Point-type |
| Example 7 | 1.5 | 0.78 | 1.21 | Point-type | Linear |
| Example 8 | 1.5 | 1.12 | 1.15 | Point-type | Linear |
| Example 9 | 1.5 | 0.86 | 0.99 | Point-type | Linear |
| Example 10 | 0.5 | 0.50 | 1.12 | Point-type | Linear |
| Example 11 | 3.0 | 0.97 | 1.09 | Point-type | Linear |
| Example 12 | 0.4 | 1.01 | 1.17 | Point-type | Linear |
| Example 13 | 3.1 | 0.94 | 1.05 | Point-type | Linear |
| Comparative example 1 | 0 | 0.95 | - | Point-type | - |
| Comparative example 2 | 1.5 | 0.93 | - | Point-type | - |
| Comparative example 3 | 0 | 0.99 | 1.15 | Point-type | Linear |
| Comparative example 4 | 1.5 (Second cathode active material) | 1.10 | 1.14 | Point-type | Linear |
| Comparative example 5 | 1.5 | 1.12 | 0.98 | Linear | Point-type |

TABLE 2

| | Capacity retention rate (%, at 200-th cycle) | High-temperature resistance increase rate (%, at 200-th cycle) |
|---|---|---|
| Example 1 | 94.7 | 0 |
| Example 2 | 93.5 | 0 |
| Example 3 | 92.9 | 5.9 |
| Example 4 | 90.2 | 1.5 |
| Example 5 | 93.6 | 7.5 |
| Example 6 | 89.9 | 2.1 |
| Example 7 | 91.2 | 8.0 |
| Example 8 | 92.5 | 7.2 |
| Example 9 | 89.5 | 2.0 |
| Example 10 | 90.5 | 1.6 |
| Example 11 | 90.3 | 3.2 |

(continued)

| | Capacity retention rate (%, at 200-th cycle) | High-temperature resistance increase rate (%, at 200-th cycle) |
|---|---|---|
| Example 12 | 91.1 | 10.5 |
| Example 13 | 88.7 | 5.1 |
| Comparative example 1 | 70.2 | 25.1 |
| Comparative example 2 | 80.1 | 17.5 |
| Comparative example 3 | 75.5 | 30.2 |
| Comparative example 4 | 81.6 | 17.7 |
| Comparative example 5 | 83.2 | 15.6 |

Referring to Tables 1 and 2, in the examples which have a two-layer structure, include a first cathode active material wherein the first cathode active material layer contains a boron coating, and have a first Raman peak intensity ratio smaller than a second Raman peak intensity ratio, the capacity retention ratio was improved and the high-temperature resistance increase ratio was reduced compared to the comparative examples.

In Example 4 where the first Raman peak intensity ratio was less than 0.5, the capacity retention ratio was relatively reduced compared to the other examples.

In Examples 5 and 8 where the first Raman peak intensity ratio exceeded 1.1, the high-temperature resistance increase ratio was relatively increased compared to the other examples.

In Examples 6 and 9 where the second Raman peak intensity ratio was less than 1.0, the capacity retention ratio was relatively reduced compared to the other examples.

In Example 7 where the second Raman peak intensity ratio exceeded 12, the high-temperature resistance increase ratio was relatively increased compared to the other examples.

In Example 12 where the content of the boron-containing coating was less than 0.5 wt% based on the weight of the first cathode active material, the capacity retention rate was relatively decreased and the high-temperature resistance increase rate was increased compared to other examples.

In Example 13 where the content of the boron-containing coating exceeded 3.0 wt% based on the weight of the first cathode active material, the capacity retention rate was relatively decreased compared to other examples.

The disclosed technology can be implemented in the field of secondary batteries or rechargeable batteries that widely used in electric vehicles, uninterruptible power supplies, battery storage power stations, and others including battery power storage for solar panels, wind power generators and other green tech power generators. Specifically, the disclosed technology can be implemented in some applications to provide a cathode that can improve the battery reliability and performance and, accordingly, to mitigate climate change. Lithium secondary batteries based on the disclosed technology can be used to address various adverse effects such as air pollution and greenhouse emissions by powering electric vehicles (EVs) as alternatives to vehicles using fossil fuel based engines and by providing battery based energy storage systems (ESS) to store renewable energy such as solar power and wind power.

Only specific examples of implementations of certain embodiments are described. Variations, improvements and enhancements of the disclosed embodiments and other embodiments may be made based on the disclosure of this patent document.

**Claims**

1. A cathode for a secondary battery comprising:

   a cathode current collector(105);
   a first cathode active material layer (110) disposed on at least one surface of the cathode current collector (105), and including a first cathode active material; and
   a second cathode active material layer (120) disposed on the first cathode active material layer (110), and including a second cathode active material different from the first cathode active material, wherein the first cathode active material includes boron,
   wherein a first Raman peak intensity ratio defined by Equation 1 below is smaller than a second Raman peak intensity ratio defined by Equation 2 below:

[Equation 1]

First Raman peak intensity ratio = ID1/IG1

[Equation 2]

Second Raman peak intensity ratio = ID2/IG2,

and

wherein, in Equations 1 and 2, ID1 is a maximum peak intensity in a wavenumber range of 1300 cm$^{-1}$ to 1400 cm$^{-1}$ in a Raman spectrum of the first cathode active material layer, IG1 is a maximum peak intensity in a wavenumber range of 1550 cm$^{-1}$ to 1650 cm$^{-1}$ in a Raman spectrum of the first cathode active material layer, ID2 is a maximum peak intensity in a wavenumber range of 1300 cm$^{-1}$ to 1400 cm$^{-1}$ in a Raman spectrum of the second cathode active material layer, and IG2 is a maximum peak intensity in a wavenumber range of 1550 cm$^{-1}$ to 1650 cm$^{-1}$ in a Raman spectrum of the second cathode active material layer.

2. The cathode according to claim 1, wherein the first cathode active material further includes at least one of titanium, aluminum, barium, cobalt, or zirconium.

3. The cathode according to claim 1 or 2, wherein the second cathode active material does not include boron.

4. The cathode according to one of claims 1 to 3, wherein the first Raman peak intensity ratio is 0.5 to 1.1.

5. The cathode according to one of claims 1 to 4, wherein the second Raman peak intensity ratio is 1.0 to 1.2.

6. The cathode according to one of claims 1 to 5, wherein each of the first cathode active material layer (110) and the second cathode active material layer (120) includes at least one of a point-type conductive material or a linear conductive material.

7. The cathode according to claim 6, wherein the first cathode active material layer (110) includes the point-type conductive material, and the second cathode active material layer (120) includes the linear conductive material.

8. The cathode according to claim 6 or 7, wherein the point-type conductive material includes at least one of graphite, carbon black, graphene, tin, tin oxide, titanium oxide, $LaSrCoO_3$, or $LaSrMnO_3$.

9. The cathode according to one of claims 6 to 8, wherein the linear conductive material includes carbon nanotubes.

10. The cathode according to one of claims 1 to 9, wherein a content of the boron is 0.5 % by weight to 3 % by weight based on a weight of the first cathode active material.

11. A secondary battery comprising:

a cathode; and
an anode disposed to face the cathode,
wherein the cathode comprises:

a cathode current collector;
a first cathode active material layer disposed on at least one surface of the cathode current collector, and including a first cathode active material; and
a second cathode active material layer disposed on the first cathode active material layer, and including a second cathode active material different from the first cathode active material,
wherein the first cathode active material includes boron,
wherein a first Raman peak intensity ratio defined by Equation 1 below is smaller than a second Raman peak intensity ratio defined by Equation 2 below:

[Equation 1]

First Raman peak intensity ratio = ID1/IG1

[Equation 2]

Second Raman peak intensity ratio = ID2/IG2,

wherein, in Equations 1 and 2, ID1 is a maximum peak intensity in a wavenumber range of 1300 $cm^{-1}$ to 1400 $cm^{-1}$ in a Raman spectrum of the first cathode active material layer, IG1 is a maximum peak intensity in a wavenumber range of 1550 $cm^{-1}$ to 1650 $cm^{-1}$ in a Raman spectrum of the first cathode active material layer, ID2 is a maximum peak intensity in a wavenumber range of 1300 $cm^{-1}$ to 1400 $cm^{-1}$ in a Raman spectrum of the second cathode active material layer, and IG2 is a maximum peak intensity in a wavenumber range of 1550 $cm^{-1}$ to 1650 $cm^{-1}$ in a Raman spectrum of the second cathode active material layer.

12. The secondary battery according to claim 11, wherein the first cathode active material further includes at least one of titanium, aluminum, barium, cobalt, or zirconium.

13. The secondary battery according to claim 11 or 12, wherein the second cathode active material does not include boron.

14. The secondary battery according to one of claims 11 to 13, wherein the first Raman peak intensity ratio is 0.5 to 1.1.

15. The cathode according to one of claims 11 to 14, wherein the second Raman peak intensity ratio is 1.0 to 1.2.

EP 4 583 188 A2

[FIG. 1]

[FIG. 2]

17

[FIG. 3]

**EP 4 583 188 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240001593